# EUROPÄISCHE PATENTSCHRIFT

(11) **EP 1 262 594 B1**
(45) Veröffentlichungstag und Bekanntmachung des Hinweises auf die Patenterteilung: **27.12.2006**
(21) Anmeldenummer: 02009093.2
(22) Anmeldetag: 24.04.2002
(51) Int. Cl.: D21D 5/02, D21D 5/24, D21F 1/70

(54) **Verfahren zur Abscheidung von Anteilen aus einer Faserstoffsuspension**
Process for separating specified materials from an aqueous fibrous material suspension
Procédé de séparation de certaines matières d' une suspension aqueuse de matières fibreuses

(30) Priorität: 29.05.2001 DE 10125975
(43) Veröffentlichungstag der Anmeldung: 04.12.2002
(73) Patentinhaber: Voith Patent GmbH, 89522 Heidenheim (DE)
(72) Erfinder: Bezler, Paul, 89522 Heidenheim (DE); Veh, Gerhard, 89420 Höchstädt (DE); Friedrich, Hans, 89529 Heidenheim (DE); Rienecker, Reimund, 89522 Heidenheim (DE)

(56) Entgegenhaltungen:
- WO-A-00/12811
- WO-A-83/01969
- WO-A-93/25752
- US-A- 4 479 872
- US-A- 5 062 964
- US-A- 5 804 061

## Beschreibung

Die Erfindung betrifft ein Verfahren gemäß dem Oberbegriff des Anspruchs 1.

Die in einem solchen Verfahren behandelte Faserstoffsuspension dient der Herstellung von Papier oder papierähnlichen Produkten. Bei Durchführung des Verfahrens hat sie zumeist einen Faserstoffgehalt, der zwischen 1 und 4 %, bezogen auf die Gesamtmasse der Faserstoffsuspension, liegt.

Ein Trennverfahren dieser Art wird z.B. zur Entfernung von unerwünschten Begleitstoffen, sogenannten Störstoffen eingesetzt. Bekanntlich enthalten Faserstoffsuspensionen, die zur Papiererzeugung eingesetzt werden sollen, insbesondere solche, die aus Altpapier gewonnen worden sind, oft eine mehr oder weniger große Menge von Störstoffen, die in der Aufbereitungsanlage entfernt werden müssen. Eine andere Anwendung wäre die Faserfraktionierung, bei der die Papierfasern nach Länge, Dicke oder Flexibilität klassiert werden.

Trennverfahren dieser Art führen dazu, dass der Überlaufstrom eingedickt wird. Auch wenn das nicht in jedem Falle unerwünscht ist, kann es doch zu Problemen beim Abführen des Überlaufes aus dem Trennbereich der verwendeten Apparatur führen. Dieser Vorgang wird am Beispiel eines Drucksortierers erläutert, der als typischer Trennapparat für ein solches Verfahren anzusehen ist:

In einem Drucksortierer wird die Suspension an einem Sieb in mindestens zwei Fraktionen aufgeteilt, und zwar einen Durchlauf, der die Stoffe, die das Sieb passiert haben, enthält und einen Überlauf mit den Stoffen, die aufgrund ihrer Größe abgewiesen wurden. Dabei geht - zusammen mit dem größten Teil der Fasern - so viel Wasser in den Durchlauf, dass der Überlauf eingedickt wird. Bei sehr kleiner Menge des Überlaufes kann diese Eindickung zu Schwierigkeiten beim Abtransport aus dem Siebbereich führen. Neben dem Nachteil der eingeschränkten Betriebssicherheit des Trennapparates wird ein Teil des Siebes so belegt, dass dort kaum noch Durchlauf gebildet wird. Oft ist aber gerade der Abzug von relativ kleinen Überlaufmengen erwünscht, z.B. dann, wenn bei Störstoffsortierung keine weitere Sortierstufe für den Überlauf vorgesehen ist. Außerdem geht bei modernen hochwirksamen Drucksortierern die Entwicklung hin zu größeren Sieben mit feinen Öffnungen und kleineren Überlaufraten, was das Problem der Überlaufeindickung weiter vergrößert. Kommen dann noch größere Mengenschwankungen im Durchsatz durch den Trennapparat hinzu, lässt sich mancher Sortierer nicht mehr befriedigend betreiben.

Aus der US-A-4,479,872 ist ein Drucksortierer bekannt, bei dem der anfallende Rejekt über ein offenes Sieb geführt wird. Dadurch teilt sich der Rejektstrom des Drucksortierers auf in einen weiteren Überlauf und einen Durchlauf, der über eine Pumpe in den Drucksortierer zurückgeführt wird. Auch in der WO-A-00/12811 wird der Rejekt eines Drucksortierers aufgeteilt und teilweise zurückgeführt.

Der Erfindung liegt die Aufgabe zu Grunde, ein betriebssicheres Verfahren zu schaffen, mit dem unter Vermeidung der erwähnten Nachteile eine effektive Trennung möglich ist und gleichzeitig der erforderliche verfahrenstechnische Aufwand akzeptabel bleibt.

Diese Aufgabe wird durch die im Kennzeichen des Anspruchs 1 genannten Merkmale in vollem Umfang gelöst.

Die bezeichneten Maßnahmen ermöglichen den sicheren Betrieb des Trennapparates. Günstig ist, wenn der Überlauf mindestens auf solche Mengen eingestellt wird, bei denen eine ausreichende Abflussgeschwindigkeit des Überlaufes gewährleistet ist. Dabei treten keine vermeidbaren Wirkungseinbußen oder Stoffverluste auf: Das Mehr an Überlauf wird wieder in den Trennprozess zurückgeführt. Auch ein Sicherheitszuschlag für die Überlaufmenge zum Ausgleich von Durchsatz-Mengenschwankungen ist problemlos zu realisieren. Es ist aber auch leicht möglich, die Menge des Rezirkulationsanteils so zu steuern, dass die Überlaufmenge auch bei geänderten Durchsatzverhältnissen konstant bleibt oder oberhalb eines eingestellten Mindestwertes gehalten wird.

Die Erfindung und ihre Vorteile werden erläutert an Hand von Zeichnungen. Dabei zeigen:
- Fig. 1: ein exemplarisches Verfahrensschema zur Störstoffentfernung;
- Fig. 2: eine Anwendung des Verfahrens zur Faserfraktionierung;
- Fig. 3: ein Mengenstrom-Schaubild;
- Fig. 4: ein für das Verfahren verwendbarer Drucksortierer.

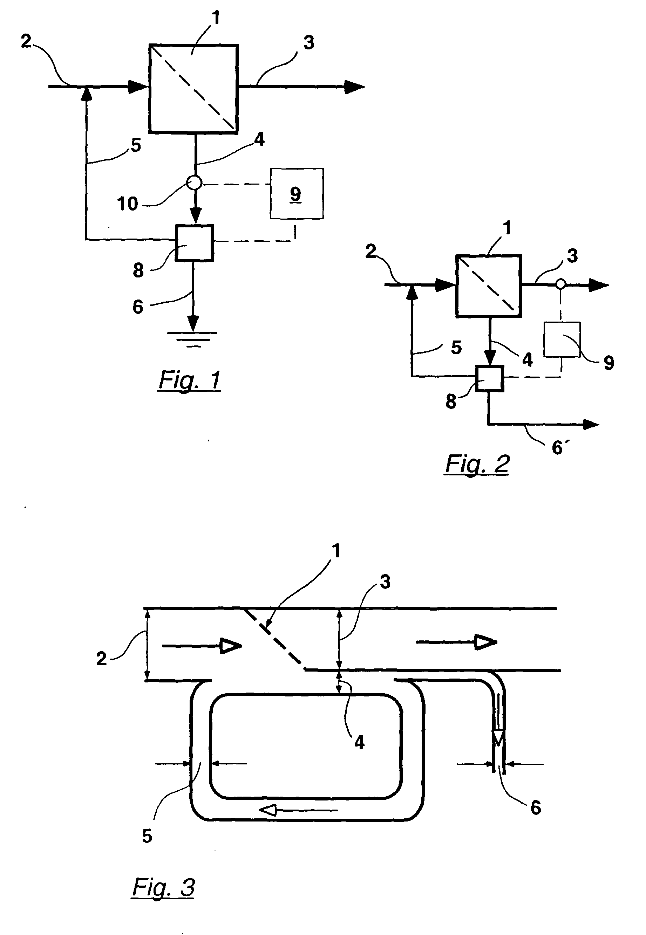

In Fig. 1 sind die wesentlichen Schritte des Verfahrens an einem Beispiel erläutert. Diese Beispiel dient der Ausscheidung von Störstoffen aus einer Faserstoffsuspension. Ein Faserstoffsuspensions-Strom 2 wird in einen Trennapparat 1 eingeleitet, in dem ein störstoffhaltiger Überlaufstrom 4 und ein Durchlaufstrom 3 (Gutstoff) gebildet werden. Dabei wird als Trennapparat 1 z.B. ein Drucksortierer verwendet. Der Überlaufstrom 4 wird mit Hilfe einer Verteileinrichtung 8 aufgeteilt, wobei ein erster Teil, der Rezirkulationsanteil 5, in den Einlauf desselben Trennapparates 1 zurückgeführt wird. Der zweite Teil des Überlaufstromes 4 wird als Grobstoffanteil 6 bei dem hier gezeigten Beispiel verworfen. In anderen Ausführungsformen des Verfahrens kann sich für den Grobstoffanteil 6 eine weitere Trennstufe anschließen. Solche Schaltungen sind an sich bekannt. Bei den meisten Trennverfahren, die für Faserstoffsuspensionen eingesetzt werden, wird der Überlaufstrom eingedickt, da am Trennelement, also z.B. dem Sieb, das Wasser bevorzugt in den Durchlauf gerät. Wird die Eindickung des Überlaufstromes zu stark, kann das zu Verstopfungsproblemen führen, die sich durch das hier vorgeschlagene Verfahren verhindern lassen. Bei Bedarf lässt sich nämlich durch Erhöhung der Menge des Überlaufstromes 4 die Eindickung ohne nennenswerten zusätzlichen Faserstoffverlust oder sonstige Nachteile reduzieren. Zur Automatisierung kann im Überlaufstrom 4 mit Hilfe eines Messfühlers 10 die Konsistenz ermittelt werden. In den Fällen, in denen die Konsistenzmessung im Überlaufstrom 4 Schwierigkeiten bereitet, kann z.B. auch die Leistungsaufnahme des Trennapparates gemessen werden, die bekanntlich auch von der Eindickung am Siebelement abhängt oder die Verdünnung des Durchlaufstromes 3 (s. Fig. 2).

Ähnlich kann das Verfahren ausgestaltet werden, wenn es gemäß Fig. 2 bei der Faserfraktionierung der Faserstoffsuspension eingesetzt werden soll. Hier dient in der Regel eine Siebmaschine als Trennapparat, der einen mit Faserlangstoff angereicherten Überlaufstrom 4 bildet. Dieser wird dann - ähnlich wie bereits beschrieben - über eine Verteileinrichtung 8 in einen Rezirkulationsanteil 5 und einen Grobstoffanteil 6' aufgeteilt. Der Grobstoffanteil 6' ist also dann die Langfaserfraktion, die für spezielle Zwecke in der Papiererzeugung verwendet wird.

Das Mengenstrom-Schaubild der Fig. 3 verdeutlicht die Wirkung des erfindungsgemäßen Verfahrens in besonders einfacher Weise. Der einlaufende Faserstoffsuspensions-Strom 2, ergänzt mit dem Rezirkulationsanteil 5, wird durch den Trennapparat 1 (als Strichlinie/Sieb angedeutet) in einen Durchlaufstrom 3 und einen etwas kleineren Überlaufstrom 4 aufgeteilt. Letzterer besteht aus dem Rezirkulationsanteil 5 und dem Grobstoffanteil 6. Der zurückgeführte Rezirkulationsanteil 5 ergänzt die Menge des zugeführten Faserstoffsuspensions-Stroms 2, so dass an dem Trennapparat 1 eine Menge verarbeitet wird, die dementsprechend größer ist als die des zulaufenden Faserstoffsuspensions-Stroms 2. Durch diese größere Menge am Trennelement des Trennapparates 1 liegt - wie bereits beschrieben - ein Vorteil des erfindungsgemäßen Verfahrens.

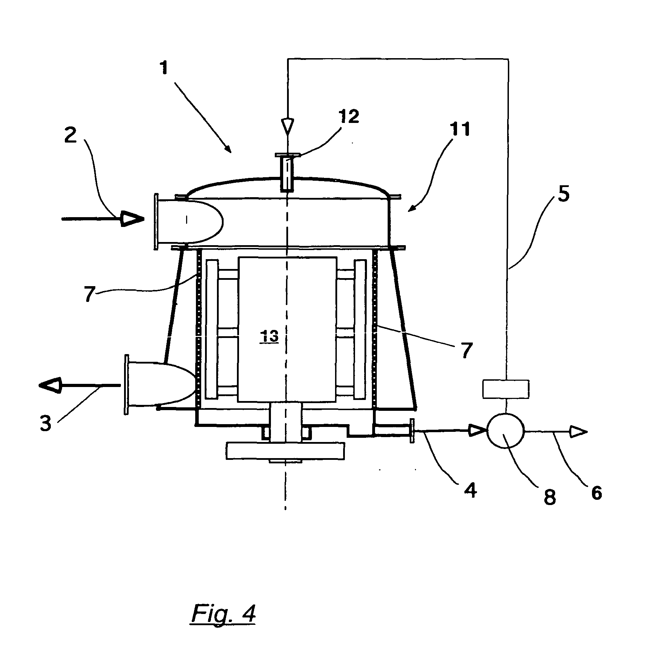

Als Trennapparat 1 kann der in Fig. 4 schematisch gezeichnete Drucksortierer verwendet werden. In einer solchen Maschine wird der zuströmende Faserstoffsuspensions-Strom 2 in das Innere des Gehäuses 11 geführt, passiert dann radial von innen nach außen teilweise den zylindrischen Siebkorb 7, der das Trennelement bildet. An diesem Siebkorb 7 wird der Durchlaufstrom 3 gebildet sowie der Überlaufstrom 4. Beide Ströme können dann durch unterschiedliche Anschlussstutzen das Gehäuse 11 wieder verlassen. Um ein Verstopfen des Siebes zu verhindern, befindet sich innerhalb des Siebkorbes 7 ein rotierender Räumer 13.

Solche Drucksortierer sind in sehr vielen Variationen bekannt und brauchen maschinentechnisch nicht näher beschrieben zu werden. Wichtig ist, dass hier der Überlaufstrom 4 in der Verteileinrichtung 8 in der bereits mehrfach beschriebenen Weise aufgeteilt wird. Wegen der Rotationsbewegung, die innerhalb des Siebkorbes 7 durch den Räumer 13 erzeugt wird, tritt der Überlaufstrom 4 mit einem Überdruck aus dem Gehäuse auf, der es ermöglicht, den daraus gebildeten Rezirkulationsanteil 5 ohne weitere Pumpe in das Gehäuse zentral wieder zurückzuführen. Dazu befindet sich im Zentrum des Deckels, also wo ein relativ geringer Druck herrscht, ein Zentralrohr 12. Diese Ausführungsform des Verfahrens ist besonders wirtschaftlich, da der zusätzliche Aufwand sehr gering ist.

## Patentansprüche

1. Verfahren zur Abscheidung von Anteilen aus einer Faserstoffsuspension (S),
wobei der Faserstoffsuspensions-Strom (2) in einen als Trennapparat (1) dienenden Drucksortierer eingeleitet wird, in dem die abzuscheidenden Anteile angereichert und in einem eingedickten Überlaufstrom (4) abgeführt werden, während der andere Anteil der Faserstoffsuspension als entsprechend verdünnter Durchlaufstrom (3) den Trennapparat (1) verlässt,
wobei der Überlaufstrom (4) aufgeteilt wird in einen Grobstoffanteil (6, 6') und einen Rezirkulationsanteil (5) und
wobei der Rezirkulationsanteil (5) stromaufwärts in denselben Trennapparat (1) zurückgeführt wird,
**dadurch gekennzeichnet,**
**dass** die Menge des Grobstoffanteiles (6, 6') so eingestellt wird, dass der Durchlaufstrom (3) die gewünschte Zusammensetzung hat,
wobei die Aufteilung des Überlaufstromes (4) durch einen Regler (9) eingestellt wird, der eine entsprechende Verteileinrichtung (8) ansteuert und
**dass** der Rezirkulationsanteil (5) ohne weitere Pumpe in das Gehäuse des Trennapparates (1) zentral wieder zurückgeführt wird.

2. Verfahren nach Anspruch 1,
**dadurch gekennzeichnet,**
**dass** der Rezirkulationsanteil (5) mindestens so groß eingestellt wird, dass die Eindickung des Überlaufstromes (4) bei allen Betriebszuständen so gering bleibt, dass sein Abfließen aus dem Trennapparat (1) nicht behindert wird.

3. Verfahren nach Anspruch 1 oder 2,
**dadurch gekennzeichnet,**
**dass** die Aufteilung des Überlaufstromes (4) in Grobstoffanteil (6, 6') und Rezirkulationsanteil (5) volumetrisch vorgenommen wird.

4. Verfahren nach Anspruch 1, 2 oder 3,
**dadurch gekennzeichnet,**
**dass** der ausgeleitete Überlaufstrom (4) auf mindestens 10 Vol-% des in den Trennapparat (1) eingeleiteten Faserstoffsuspensions-Stromes (2) eingestellt wird.

5. Verfahren nach Anspruch 1, 2, 3 oder 4,
**dadurch gekennzeichnet,**
**daß** der Volumenstrom des Rezirkulationsanteiles (5) auf mindestens 15 % des in den Trennapparat (1) eingeleiteten Faserstoffsuspensions-Stromes (2) eingestellt wird.

6. Verfahren nach einem der voranstehenden Ansprüche,
**dadurch gekennzeichnet,**
**dass** mit dem Grobstoffanteil (6) unerwünschte Störstoffe abgeschieden werden.

7. Verfahren nach Anspruch 6,
**dadurch gekennzeichnet,**
**dass** der Grobstoffanteil (6) nur noch in einem Rejektsortierer bearbeitet wird.

8. Verfahren nach Anspruch 6 oder 7,
**dadurch gekennzeichnet,**
**dass** der Grobstoffanteil (6) eingedickt und verworfen wird.

9. Verfahren nach einem der Ansprüche 1 bis 5,
**dadurch gekennzeichnet,**
**dass** mit dem Grobstoffanteil (6') eine Langfaserfraktion abgeschieden wird.

10. Verfahren nach einem der voranstehenden Ansprüche,
**dadurch gekennzeichnet,**
**dass** der Regler (9) ein Stoffdichtesignal erhält, das von einem Messfühler (10) zur Ermittlung der Konsistenz im Überlaufstrom (4) stammt.

11. Verfahren nach einem der voranstehenden Ansprüche 1 bis 9,
**dadurch gekennzeichnet,**
**dass** der Regler (9) ein Stoffdichtesignal erhält, das von einem Messfühler (10) zur Ermittlung der Konsistenz im Durchlaufstrom (3) stammt.

12. Verfahren nach einem der voranstehenden Ansprüche 1 bis 9,
**dadurch gekennzeichnet,**
**dass** der Regler (9) ein Signal der Leistungsaufnahme des Drucksortierers verarbeitet.

13. Verfahren nach einem der voranstehenden Ansprüche,
**dadurch gekennzeichnet,**
**dass** der Faserstoffsuspensions-Strom (2) 1 % Papierfasern enthält.

14. Verfahren nach Anspruch 13,
**dadurch gekennzeichnet,**
**dass** der Faserstoffsuspensions-Strom (2) 1 bis 4 % Papierfasern enthält.

15. Verfahren nach einem der voranstehenden Ansprüche,
**dadurch gekennzeichnet,**
**dass** der überwiegende Anteil des im Faserstoffsuspensions-Strom (2) geführten Faserstoffes in den Durchlaufstrom (3) gebracht wird.

16. Verfahren nach Anspruch 15,
**dadurch gekennzeichnet,**
**dass** der Durchlaufstrom (3) mindestens 1 % Papierfasern enthält.

## Claims

1. A method for separating off fractions from a pulp suspension (S), wherein the stream of pulp suspension (2) is introduced into a pressure grader serving as a separating apparatus (1) in which the fractions to be separated off are enriched and transported off in a thickened overflow stream (4), while the other fraction of the pulp suspension leaves the separating apparatus (1) as a correspondingly diluted through-feed stream (3),
the overflow stream (4) being divided into a coarse fraction (6, 6') and a recirculation fraction (5), and
the recirculation fraction (5) being returned upstream into the same separating apparatus (1),
**characterised in that**
the amount of the coarse fraction (6, 6') is adjusted such that the through-feed stream (3) has the desired composition,
the division of the overflow stream (4) being adjusted by a regulating means (9) which actuates a corresponding distribution means (8) and
that the recirculation fraction (5) is returned centrally without a further pump into the housing of the separating apparatus (1).

2. A method according to Claim 1,
**characterised in that**
the recirculation fraction (5) is set to be at least so large that the thickening of the overflow stream (4) for all operating conditions remains so low that it is not prevented from flowing away out of the separating apparatus (1),

3. A method according to Claim 1 or 2,
**characterised in that**
the division of the overflow stream (4) into coarse fraction (6, 6') and recirculation fraction (5) is performed volumetrically.

4. A method according to Claim 1, 2 or 3,
**characterised in that**
the discharged overflow stream (4) is set to at least 10% by volume of the stream of pulp suspension (2) introduced into the separating apparatus (1).

5. A method according to Claim 1, 2, 3 or 4,
**characterised in that**
the volumetric flow rate of the recirculation fraction (5) is set to at least 15% of the stream of pulp suspension (2) introduced into the separating apparatus (1).

6. A method according to one of the preceding claims,
**characterised in that**
undesirable anionic trash is separated off with the coarse fraction (6).

7. A method according to Claim 6,
**characterised in that**
the coarse fraction (6) is processed only in a reject sorter.

8. A method according to Claim 6 or 7,
**characterised in that**
the coarse fraction (6) is thickened and discarded.

9. A method according to one of Claims 1 to 5,
**characterised in that**
a long-fibre fraction is separated off with the coarse fraction (6').

10. A method according to one of the preceding claims,
**characterised in that**
the regulating means (9) receives a pulp density signal which originates from a measuring sensor (10) for determining the consistency in the overflow stream (4).

11. A method according to one of the preceding Claims 1 to 9,
**characterised in that**
the regulating means (9) receives a pulp density signal which originates from a measuring sensor (10) for determining the consistency in the through-feed stream (3).

12. A method according to one of the preceding Claims 1 to 9,
**characterised in that**
the regulating means (9) processes a signal of the power consumption of the pressure grader.

13. A method according to one of the preceding claims,
**characterised in that**
the stream of pulp suspension (2) contains 1% paper fibres.

14. A method according to Claim 13,
**characterised in that**
the stream of pulp suspension (2) contains 1 to 4% paper fibres.

15. A method according to one of the preceding claims,
**characterised in that**
the predominant fraction of the pulp carried in the stream of pulp suspension (2) is introduced into the through-feed stream (3).

16. A method according to Claim 15,
**characterised in that**
the through-feed stream (3) contains at least 1% paper fibres.

## Revendications

1. Procédé de séparation de portions hors d'une suspension aqueuse de matières fibreuses (S),
le courant de suspension aqueuse de matières fibreuses (2) étant introduit dans un classificateur à pression servant d'appareil séparateur (1) dans lequel les portions à séparer sont concentrées et sont évacuées dans un courant de surverse épaissi (4) tandis que l'autre portion de la suspension de matières fibreuses quitte l'appareil séparateur (1) sous forme de courant de filtrat (3) éclairci d'autant,
le courant de surverse (4) étant partagé en une portion de matière grossière (6, 6') et en une portion de recirculation (5), et
la portion de recirculation (5) étant recyclée en amont dans le même appareil séparateur (1),
**caractérisé en ce que**
la quantité de portion de matière grossière (6, 6') est réglée de sorte que le courant de filtrat (3) ait la composition souhaitée,
le partage du courant de surverse (4) étant réglé par un régulateur (9) qui pilote un dispositif de partage approprié (8), et
**en ce que** la portion de recirculation (5) est de nouveau recyclée de manière centralisée, sans pompe supplémentaire, dans le récipient de l'appareil séparateur (1).

2. Procédé selon la revendication 1,
**caractérisé en ce que**
la portion de recirculation (5) est réglée au moins à un niveau tel que, dans tous les états de fonctionnement, l'épaississement du courant de surverse (4) reste si faible que cela ne gêne pas son écoulement hors de l'appareil séparateur (1).

3. Procédé selon la revendication 1 ou 2,
**caractérisé en ce que**
le partage du courant de surverse (4) en portion de matière grossière (6, 6') et en portion de recirculation (5) s'effectue de manière volumétrique.

4. Procédé selon la revendication 1, 2 ou 3,
**caractérisé en ce que**
le courant de surverse (4) extrait est réglé à au moins 10 % du volume de courant de suspension aqueuse de matières fibreuses (2) introduit dans l'appareil séparateur (1).

5. Procédé selon la revendication 1, 2, 3 ou 4,
**caractérisé en ce que**
l'écoulement volumique de portion de recirculation (5) est réglé à au moins 15 % du courant de suspension de matières fibreuses (2) introduit dans l'appareil séparateur (1).

6. Procédé selon l'une des revendications précédentes,
**caractérisé en ce que**
des matières parasites indésirables sont séparées avec la portion de matière grossière (6).

7. Procédé selon la revendication 6,
**caractérisé en ce que**
la portion de matière grossière (6) n'est plus traitée que dans un classificateur de rebut.

8. Procédé selon la revendication 6 ou 7,
**caractérisé en ce que**
la portion de matière grossière (6) est épaissie et rebutée.

9. Procédé selon l'une des revendications 1 à 5,
**caractérisé en ce que**
une fraction à longues fibres est séparée avec la portion de matière grossière (6').

10. Procédé selon l'une des revendications précédentes,
**caractérisé en ce que**
le régulateur (9) reçoit un signal de consistance de matière qui provient d'une sonde (10) servant à déterminer la consistance dans le courant de surverse (4).

11. Procédé selon l'une des revendications précédentes 1 à 9,
**caractérisé en ce que**
le régulateur (9) reçoit un signal de consistance de matière qui provient d'une sonde (10) servant à déterminer la consistance dans le courant de filtrat (3).

12. Procédé selon l'une des revendications précédentes 1 à 9,
**caractérisé en ce que**
le régulateur (9) traite un signal de la puissance absorbée par le classificateur à pression.

13. Procédé selon l'une des revendications précédentes,
**caractérisé en ce que**
le courant de suspension aqueuse de matières fibreuses (2) contient 1 % de fibres de papier.

14. Procédé selon la revendication 13,
**caractérisé en ce que**
le courant de suspension aqueuse de matières fibreuses (2) contient 1 à 4 % de fibres de papier.

15. Procédé selon l'une des revendications précédentes,
**caractérisé en ce que**
la majeure partie de la matière fibreuse transportée dans le courant de suspension de matières fibreuses (2) passe dans le courant de filtrat (3).

16. Procédé selon la revendication 15,
**caractérisé en ce que**
le courant de filtrat (3) contient au moins 1 % de fibres de papier.
